# EUROPÄISCHE PATENTSCHRIFT

(11) **EP 2 432 814 B1**
(45) Veröffentlichungstag und Bekanntmachung des Hinweises auf die Patenterteilung: **08.10.2014**
(21) Anmeldenummer: 10721958.6
(22) Anmeldetag: 04.05.2010
(51) Int. Cl.: C08G 18/64, C08G 59/18, B01F 17/00, C08G 18/28, C08G 18/58, C08G 59/06

(54) **VERFAHREN ZUR HERSTELLUNG VON EPOXID-AMIN-ADDITIONSVERBINDUNGEN**
METHOD FOR PRODUCING EPOXIDE AMINE ADDITION COMPOUNDS
PROCÉDÉ DE PRODUCTION DE COMPOSÉS D'ADDITION À BASE D'ÉPOXY ET D'AMINE

(30) Priorität: 20.05.2009 DE 102009022148
(43) Veröffentlichungstag der Anmeldung: 28.03.2012
(73) Patentinhaber: BYK-Chemie GmbH, 46483 Wesel (DE)
(72) Erfinder: ISSBERNER, Jörg, 47877 Willich-Neersen (DE); TLAUKA, Frank, 46147 Oberhausen (DE); BECKMANN, Tom, 46499 Hamminkeln (DE); ORTH, Ulrich, 46485 Wesel (DE); OMEIS, Jürgen, 46286 Dorsten-Lembeck (DE)
(86) Internationale Anmeldenummer: PCT/EP2010/002712
(87) Internationale Veröffentlichungsnummer: WO 2010/133292

(56) Entgegenhaltungen:
- WO-A1-2008/092687
- DD-A1- 154 985
- US-A- 4 186 086

## Beschreibung

Die Erfindung betrifft ein Verfahren zur Herstellung von Additionsverbindungen.

Netz- und Dispergiermittel werden als Additive insbesondere bei der Herstellung von Pigmentkonzentraten sowie bei der Stabilisierung von Feststoffen in Bindemitteln, Lacken, Kunststoffen und Kunststoffmischungen eingesetzt. Als wesentliche Aufgaben derartiger Additive werden insbesondere die Reduktion der Viskosität, die Verbesserung der Lagerstabilität sowie der Fließeigenschaften und ggf. die Erhöhung der Farbstärke (insofern Pigmente enthalten sind) angesehen. Es sind hohe mechanische Kräfte erforderlich, um Feststoffe in flüssige Medien stabil einzubringen. Es ist daher üblich, Mittel einzusetzen, um diese Dispergierkräfte zu erniedrigen und damit sowohl den notwendigen Gesamtenergieeintrag in das System als auch die Dispergierzeit gering zu halten. Bei den bekannten Dispergiermitteln handelt es sich meist um oberflächenaktive Substanzen, die in kleiner Menge entweder direkt auf den Feststoff aufgebracht oder dem flüssigen Medium zugesetzt werden. Als in der Praxis bewährte Netz- und Dispergiermittel werden insbesondere auch Verbindungen des Polyepoxid/Amin-Typs angesehen.

Die DD-C 154 985 betrifft ein in diskontinuierlicher Betriebsweise durchgeführtes Herstellungsverfahren von hochmolekularen (Molekulargewicht von >10.000 g/mol) Polyepoxid/Amin-Addukten, in welchem als entsprechende Epoxidkomponente ausschließlich aromatische Diglycidether eingesetzt werden. Nachteilig an diesem Herstellungsverfahren sind lange Reaktionszeiten (von teilweise bis zu 60 Stunden) sowie die teilweise gelbe bzw. bräunliche Färbung der erhaltenen Reaktionsprodukte.

Die DE-A 10 2007 005 70 beschreibt hoch wirksame Netz- und Dispergiermittel des Polyepoxid/Amin-Typs, welche als durch Polyaddition gewonnene Copolymere vorliegen und durch ein zweistufiges Umsetzungsverfahren hergestellt werden. In der ersten Stufe werden Polyepoxid/Amin-Addukte aus den entsprechenden Polyepoxiden und Aminen hergestellt, wobei in der zweiten Stufe die in der ersten Stufe hergestellten Polyepoxid/Amin-Addukte mit Polyalkylenoxid-modifizierten Isocyanaten umgesetzt werden. Jedoch ist die der ersten Stufe zugrunde liegende Reaktion in der großtechnischen Praxis nur mit einem extrem hohen (Sicherheits)aufwand beherrschbar, weil die besagte Reaktion ausgesprochen exotherm sowie schwer kontrollierbar (bei tiefen Temperaturen besteht aufgrund geringer Reaktivität die Gefahr einer Rohstoffakkumulation und bei hohen Temperaturen ist die Reaktivität besonders hoch) ist. Die Qualität der entsprechenden als Netz- und Dispergiermittel eingesetzten Copolymere (Reaktionsprodukte der zweiten Stufe) ist jedoch als gut anzusehen. Die im Copolymer vorhandene Urethanbindung ermöglicht sowohl eine breite Verträglichkeit mit gängigen Bindemittel-Lösemittelsystemen als auch eine vorteilhafte Langzeit- und Lagerstabilität aufgrund deren chemischen Inertheit. Allerdings besteht weiterhin ein Bestreben, die Qualität der als Vorprodukt vorliegenden Polyepoxid/Amin-Addukte bzw. der als Endprodukt vorliegenden Copolymere weiter zu verbessern.

Es ist daher die Aufgabe der vorliegenden Erfindung, ein wirtschaftliches und sicheres Verfahren zur Herstellung eines Polyepoxid/Amin-Addukts bereitzustellen, auf dessen Basis qualitativ hochwertige Netz- und Dispergiermittel herstellbar sind.

Die Lösung dieser Aufgabe ist ein Verfahren zur Herstellung von Additionsverbindungen durch Umsetzung von
a) einer mindestens zwei Epoxidfunktionen aufweisenden Epoxidkomponente (A) mit
b) mindestens einer eine primäre Aminfunktion enthaltenden Aminkomponente (B)

in kontinuierlicher Betriebsweise in einem Reaktor, welchem die Epoxidkomponente (A) und die Aminkomponente (B) in einem molaren Verhältnis von 5:1 - 1:50 kontinuierlich zugeführt werden, so dass in dem Reaktor ein die Epoxidkomponente (A), die Aminkomponente (B) sowie Umsetzungsprodukte aus der Epoxidkomponente (A) und der Aminkomponente (B) enthaltendes Reaktionsgemisch entsteht, welches in Form eines Produktstroms aus dem Reaktor ausgeleitet wird, wobei 10-100 Mol% der durch die Zufuhr der Epoxidkomponente (A) in den Reaktor eingeführten Epoxidfunktionen in dem Reaktor umgesetzt werden und der Reaktor in Form einer Reaktionsmischpumpe ausgebildet ist, die ein rotierendes Behältnis aufweist, welches die Epoxidkomponente (A) und die Aminkomponente (B) getrennt voneinander aufnimmt und diese beiden Komponenten unter dem Einfluss von mechanischer Scherung miteinander in Kontakt bringt und vermischt.

Die Umsetzungsprodukte aus der Epoxidkomponente (A) und der Aminkomponente (B) liegen vorwiegend in Form der Additionsverbindungen vor. Die Tatsache, daß 10-100 Mol% der durch die Zufuhr der Epoxidkomponente (A) in den Reaktor eingeführten Epoxidfunktionen in dem Reaktor umgesetzt werden, bedeutet, dass ein Mindestanteil der in den Reaktor kontinuierlich eingeführten Epoxidkomponente (A), hauptsächlich (oder ggf. auch ausschließlich) mit der Aminkomponente (B) sowie mit bereits erzeugten Additionsverbindungen (Umsetzungsprodukte aus der Epoxidkomponente (A) und der Aminkomponente (B)), noch im Reaktor selbst reagiert. Diesbezüglich gewährleistet das erfindungsgemäße Verfahren dem Reaktionsgemisch in dem Reaktor eine genügend lange Verweilzeit.

Das erfindungsgemäße Verfahren gewährleistet die Herstellung von Additionsverbindungen, welche eine besonders einheitliche und hohe Qualität aufweisen. In diesem Zusammenhang ist die verhältnismäßig enge Molekulargewichtsverteilung der erhaltenen Additionsverbindungen sowie der relativ geringe Anteil von Nebenprodukten besonders hervorzuheben. Wesentlich ist auch, dass das erfindungsgemäße Verfahren verhältnismäßig leicht handhabbar ist, wodurch die zugrunde liegende stark exotherme Reaktion gut kontrollierbar ist. Insbesondere im Dauerbetrieb gewährleistet das erfindungsgemäße Verfahren eine hohe Wirtschaftlichkeit.

Als Epoxidkomponente (A) werden Verbindungen eingesetzt, die zwei oder mehr Epoxygruppen pro Molekül enthalten und normalerweise mindestens sechs Kohlenstoffatome aufweisen. Obwohl nicht ausgeschlossen, enthalten letztere Verbindungen außer Epoxidfunktionen in der Regel keine weiteren zusätzlichen funktionelle Gruppen. Die Epoxidkomponente (A) kann auch als ein Gemisch verschiedener Verbindungsspezies vorliegen.

In der Regel wird als Epoxidkomponente (A) ein Diepoxid der allgemeinen Formel I 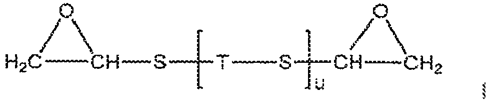 mit
S gleich oder verschieden sowie repräsentiert durch CH₂-O oder CH₂,
T gleich oder verschieden sowie repräsentiert durch verzweigtes oder unverzweigtes C₂-C₁₈-Alkylen, C₅-C₁₂-Cycloalkylen, C₆-C₁₀-Arylen oder verzweigtes oder unverzweigtes C₆-C₁₅Aralkylen sowie
u repräsentiert durch eine ganze Zahl von 1-8,
eingesetzt.

Typische Beispiele für als Epoxidkomponente (A) einsetzbare Spezies sind Umsetzungsprodukte von Diphenylolpropan (Bisphenol A) und Epichlorhydrin sowie deren höhere Homologe (die beispielsweise unter den Markenbezeichnungen D.E.R. oder Epikote von der DOW Chemical Company bzw. von Resolution Performance Products angeboten werden), 1.6-Hexandiglycidylether, 1.4-Butandiglycidylether, Polypropylenglykoldiglycidylether und Polytetrahydrofurandiglycidylether (unter der Handelsbezeichnung Grilonit^{®} der Ems-Chemie erhältlich).

Als Aminkomponente (B) werden mindestens eine primäre Aminofunktion aufweisende Verbindungen eingesetzt, welche bevorzugt 3 bis 28 Kohlenstoffatome enthalten und ggf. noch zusätzliche funktionelle Gruppen aufweisen, die meist in Form von Hydroxylgruppen oder tertiären Aminogruppen, jedoch bevorzugt nicht als Alkoxyfunktionen, vorliegen.

Die Aminkomponente (B) kann auch als ein Gemisch verschiedener Verbindungsspezies vorliegen.

Bevorzugt ist die Aminkomponente (B) ausgewählt aus primären Aminen der allgemeinen Formel II

H₂N-R II

mit
R repräsentiert durch verzweigtes oder unverzweigtes C₃-C₁₈-Alky), C₅-C₁₂-Cycloalkyl, C₆-C₁₀-Aryl oder verzweigtes oder unverzweigtes C₇-C₁₂-Aralkyl
und/oder primären Aminen der allgemeinen Formel III

H₂N-R'-Z III

mit
R' repräsentiert durch eine verzweigte oder unverzweigte C₂-C₁₂-Alkylengruppe sowie Z repräsentiert durch einen aliphatischen oder aromatischen heterozyklischen C₃-C₆-Rest.

Typische Beispiele für als Aminkomponente (B) einsetzbare Spezies sind Ethanolamin, Butanolamin, Dimethylaminopropylamin, 2-Amino-2-methyl-1-propanol, Amine mit mehr als nur einer zusätzlichen funktionellen Gruppe, wie Amino-2-Ethyl-1,3-propandiol oder 2-Amino-2-hydroxymethyl-1,3-propandiol, wobei der Einsatz von Ethanolamin, Butanolamin und/oder Dimethylaminopropylamin besonders bevorzugt ist.

Die Umsetzung der Epoxidkomponente (A) mit der Aminkomponente (B), welche unter Bildung einer β-Hydroxyaminofunktion erfolgt, kann in einem Lösungsmittelsystem, bevorzugt aber in Substanz nach den dem Fachmann bekannten Verfahren durchgeführt werden. Die zu wählende Reaktionstemperatur hängt dabei auch von der Reaktivität der Edukte ab. Viele Epoxide reagieren mit Aminen bereits bei Raumtemperatur. Hingegen können für weniger reaktive Epoxide deutlich höhere Reaktionstemperaturen erforderlich sein. Gegebenenfalls können dem Fachmann bekannte Katalysatoren verwendet werden, um die Umsetzung des Epoxids mit dem Amin zu beschleunigen.

Meist werden die Epoxidkomponente (A) und die Aminkomponente (B) in einem molaren Verhältnis von 2:1 bis 1:5, bevorzugt 1:1 bis 1:1,5 dem Reaktor kontinuierlich zugeführt.

Üblicherweise werden 25-100 Mol-%, bevorzugt 50-95 Mol-% der durch die Zufuhr der Epoxidkomponente (A) in den Reaktor eingeführten Epoxidfunktionen in dem Reaktor umgesetzt.

In einer bevorzugten Ausführungsform der Erfindung beträgt die Temperatur des Reaktionsgemischs im Reaktor 50-180 °C, bevorzugt 80-130 °C sowie besonders bevorzugt 95-120 °C, wobei dann der Quotient aus Gesamtvolumen des in dem Reaktor enthaltenen Reaktionsgemischs und dem Gesamtvolumenstrom des in Form des Produktstroms aus dem Reaktor ausgeleiteten Reaktionsgemischs 2 - 20.000 Sekunden, bevorzugt 5 - 10.000 Sekunden, besonders bevorzugt 10 - 5.000 Sekunden, beträgt.

Der Quotient aus Gesamtvolumen des in dem Reaktor enthaltenen Reaktionsgemischs und dem Gesamtvolumenstrom des in Form des Produktstroms aus dem Reaktor ausgeleiteten Reaktionsgemischs ist als ein Maß für die Verweilzeit anzusehen. Die relevanten verhältnismäßig kurzen Verweilzeiten gewährleisten, dass trotz der relativ hohen Temperaturen sich in einem nur geringen Maße unerwünschte Nebenreaktionen bemerkbar machen.

Die Epoxidkomponente (A) sowie die Aminkomponente (B) werden jeweils normalerweise mit einer Eintrittstemperatur von - 20 bis 200 °C, bevorzugt 0 bis 150 °C, besonders bevorzugt 25 bis 100 °C dem Reaktor zugeführt. Die Differenz zwischen der Austrittstemperatur (beim Austritt aus dem Reaktor) des Reaktionsgemischs und dieser Eintrittstemperatur beträgt meist 0 bis 200 °C, bevorzugt 10 bis 100 °C. Typischerweise beträgt die Heizleistung bezogen auf die im Reaktor dem Reaktionsgemisch von außen zugeführten Wärme 5 bis 1500 Watt pro kg, bevorzugt ungefähr 1000 Watt pro kg. In der Regel beträgt das Gesamtvolumen des In dem Reaktor enthaltenen Reaktionsgemischs 0,001- 100 Liter, bevorzugt 0,05 - 10 Liter, besonders bevorzugt 0,05 - 5 Liter.

In einer bevorzugten Ausführungsform ist der Reaktor mit bewegten Elementen ausgestattet, welche durch die Zufuhr von Mischenergie in dynamischer Art und Weise in dem Reaktor Vermischung betreiben. Die dynamische Durchmischung bewirkt die Erzeugung eines besonders homogenen Reaktionsgemischs sowie eine effektive Bereitstellung der Reaktionswärme zugunsten einer stabilen Reaktortemperatur.

Erfindungsgemäß ist der Reaktor in Form einer Reaktionsmischpumpe ausgebildet, die ein rotierendes Behältnis aufweist, welches die Epoxidkomponente (A) und die Aminkomponente (B) getrennt voneinander aufnimmt und diese beiden Komponenten unter dem Einfluss von mechanischer Scherung miteinander in Kontakt bringt und vermischt. Das rotierende Behältnis ist häufig in Form eines Kanalsystems ausgebildet (welches in einem entsprechenden Rotationskörper eingeformt ist) und ist üblicherweise von einem ruhenden Mantel umgeben, wobei sich zwischen dem Mantel und dem rotierenden Behältnis mit Reaktionsmischung gefüllte Zwischenräume ergeben. Üblicherweise erfolgt die mechanische Scherung sowohl innerhalb des Kanalsysterns als auch in den Zwischenräumen. Die DE-C 42 20 239 beschreibt eine derartige, sich besonders gut für die Durchführung des erfindungsgemäßen Verfahrens eignende Reaktionsmischpumpe. Letztere besteht im Wesentlichen aus einer rotationssymmetrischen Mischkammer, welche aus einer Umfangswand und zwei Stirnwänden gebildet ist und einem in der Mischkammer angeordneten, durch einen drehenden Magneten angetriebenen Mischrotor. Der Mischrotor weist an seinem Umfang gleichmäßig verteilte Kantenbrüche und an seinen Stirnwänden Ausnehmungen auf, die mit ringförmigen Kanälen in den Stirnwänden Druckzellen ausbilden, wobei die Druckzellen über Durchgangsbohrungen in dem Rotor miteinander verbunden sind. Ferner besitzt die Reaktionsmischpumpe mindestens eine Einlassöffnung für jedes Edukt und eine Auslassöffnung für das Reaktionsgemisch in der Umfangswand. Der Pumpenkopf ist über einen Temperierkreislauf durch ein externes Heiz- bzw. Kühlaggregat temperierbar. Die Peripherie besteht mindestens aus einer ggf. beheizbaren Dosiereinrichtung für jedes Edukt und einer nachgeschalteten ggf. beheizbaren Leitung für das Reaktionsgemisch. Die Umdrehnngsfrequenz des Rotors, welche zweckmäßigerweise über einen externen Frequenzumrichter gesteuert wird, beträgt bei der Durchführung des erfindungsgemäßen Verfahrens üblicherweise 50 bis 1000 Umdrehungen pro Minute. Es hat sich gezeigt, dass das Molekulargewicht der erhaltenen Additionsverbindungen nahezu unabhängig von der Umdrehungsfrequenz des Rotors ist.

Vorstehend beschriebene Reaktionsmischpumpen beschleunigen die Stoff- und Wärmetransportprozesse, wobei sich zusätzlich Anfangs- und Randbedingungen der Reaktion exakt einstellen lassen. Die Verweilzeiten sind besonders genau einstellbar, wobei das stark exotherme erfindungsgemäße Verfahren annähernd isotherm betrieben werden kann.

Häufig sind dem Reaktor weitere in kontinuierlicher Weise betriebene Reaktorsysteme nachgeschaltet, welche bevorzugt die Nachdosierung der Epoxidkomponente (A) und/oder der Aminkomponente (B) und/ oder eine Nachtemperierung verwirklichen. Die Nachreaktion in den nachgeschalteten Reaktorsystemen gewährleistet häufig erst das Erreichen des gewünschten Umsatzes, welcher typischerweise bezogen auf die insgesamt umsetzbaren Epoxidfunktionen bei ca. >95 % liegt.

Typischerweise ist der Reaktor in einer Vorrichtung angeordnet, welche weitere jeweils unabhängig voneinander kontinuierlich betriebene Reaktoreinrichtungen enthält, in welchen die Epoxidkomponente (A) mit der Aminkomponente (B) umgesetzt wird, wobei diese Reaktoreinrichtungen und der Reaktor zeitgleich und unabhängig voneinander parallel betrieben werden. Ein derartiger Parallelbetrieb gewährleistet nicht nur die Erzeugung von hohen Produktionsmengen, sondern auch eine hohe Flexibilität, da kurzfristig und mit verhältnismäßig geringem Aufwand eine derart betriebene Reaktoreinrichtung durch eine andere ersetzbar ist.

Relevant sind auch die Additionsverbindungen, welche mit dem vorstehend beschriebenen Verfahren herstellbar sind.

Wie bereits vorstehend gesagt, zeichnen sich diese Additionsverbindungen durch eine besonders einheitliche und hohe Qualität aus (enge Molekulargewichtsverteilung sowie relativ geringe Anteil von Nebenprodukten).

Von Relevanz ist auch eine Urethanverbindung, erhältlich aus der Umsetzung der vorstehend beschriebenen Additionsverbindungen mit mindestens einer Isocyanatkomponente der allgemeinen Formel IVa und/oder IVb 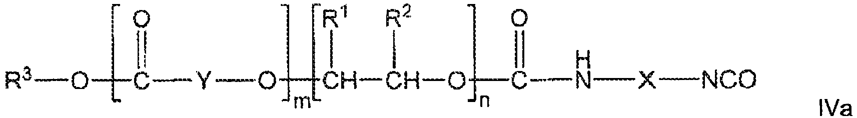 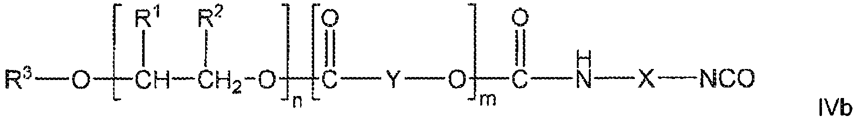 mit
R³ repräsentiert durch verzweigtes oder unverzweigtes C₁- C₁₈-Alkyl, C₅-C₁₂-Cycloalkyl, C₆-C₁₀-Aryl und/oder verzweigtes oder unverzweigtes C₇-C₁₅-Aralkyl,
R¹ und R² jeweils gleich oder verschieben und unabhängig voneinander repräsentiert durch H, verzweigtes oder unverzweigtes C₁-C₁₅-Alkyl und/oder C₆-C₁₀Aryl,
X repräsentiert durch eine verzweigte oder unverzweigte C₄-C₁₈-Alkylengruppe, C₆-C₁₂-Cycloalkylengruppe und/oder verzweigte oder unverzweigte C₆-C₁₀-Aralkylengruppe,
Y gleich oder verschieden sowie repräsentiert durch eine verzweigte oder unverzweigte C₄- C₁₇-Alkylengruppe und/oder durch eine C₅-C₁₂-Cycloalkylengruppe,
n repräsentiert durch eine ganze Zahl von 0-100, bevorzugt 1-100, besonders bevorzugt 2-100 und
m repräsentiert durch eine ganze Zahl von 0-100, bevorzugt 1-100, besonders bevorzugt 2-100.

Bevorzugt wird die Isocyanatkomponente in einem solchen stöchiometrischen Verhältnis zu den relevanten Additonsverbindungen eingesetzt, daß 5-100%, bevorzugt 20-100% und besonders bevorzugt 40-100% der OH-Gruppen der Additionsverbindungen unter Urethanbildung umgesetzt werden.

Die Isocyanatkomponente wird bevorzugt hergestellt nach den Verfahren, wie sie in der DE-A 199 19 482 beschrieben sind. Dazu werden Monohydroxy-Verbindungen mit einem Überschuss an Diisocyanat, bevorzugt Toluylendiisocyanat, umgesetzt und der nicht umgesetzte Teil des Diisocyanats wird aus dem Reaktionsgemisch entfernt.

Von Relevanz ist außerdem die Verwendung der vorstehend beschriebenen Urethanverbindung als Netz- und/oder Dispergiermittel für organische und/oder anorganische Pigmente oder Füllstoffe.

Die relevante Urethanverbindung ist ein hochwertiges und breit verträgliches Netz- und Dispergiermittel, dessen Qualität maßgeblich durch dessen Vorprodukt in Form der erfindungsgemäßen Additionsverbindungen bestimmt wird. Die Verwendung als Netz-und/oder Dispergiermittel bezieht sich erfindungsgemäß auf die Benetzung/ Dispergierung von organischen und/oder anorganischen Pigmenten oder Füllstoffen. Die Dispergiermittel können alleine oder zusammen mit Bindemitteln eingesetzt werden.

Neben dem Einsatz als Netz- und Dispergiermittel in wässrigen und/oder lösemittelhaltigen Dispersionen, insbesondere Lacken, ist es ebenfalls möglich, pulver- oder faserförmige Feststoffe mit den erfindungsgemäßen Urethanverbindungen zu beschichten.

Von Relevanz sind somit schließlich auch Pulver- oder faserförmige Feststoffe, die mit der vorstehend beschrieben Urethanverbindung beschichtet sind.

Derartige Beschichtungen von organischen und anorganischen Feststoffen werden in bekannter Art und Weise durchgeführt. Beispielsweise sind in der EP-A 0 270 126 solche Verfahren beschrieben. Speziell bei Pigmenten kann eine Beschichtung der Pigmentoberfläche während oder nach der Synthese der Pigmente erfolgen, beispielsweise durch Zusatz der relevanten Urethanverbindung zur Pigmentsuspension. Auf diese Weise vorbehandelte Pigmente zeigen eine leichte Einarbeitbarkeit in das Bindemittelsystem, ein verbessertes Viskositäts- und Flockulationsverhalten sowie einen guten Glanz gegenüber nicht behandelten Pigmenten. Desweiteren eignen sich die relevanten Urethanverbindungen zur Dispergierung von z.B. Effektpigmenten in Nagellacken.

Die relevante Urethanverbindung wird bevorzugt in einer Menge von 0,5-60 Gew.-% bezogen auf den zu dispergierenden Feststoff eingesetzt. Bei speziellen Feststoffen können zur Dispergierung aber auch wesentlich höhere Mengen an Dispergiermittel notwendig sein.

Die eingesetzte Menge an Dispergiermittel ist im Wesentlichen abhängig von Größe und Art der Oberfläche des zu dispergierenden Feststoffs. Beispielsweise benötigt Ruß wesentlich größere Mengen an Dispergiermittel als Titandioxid. In der EP-A 0 270 126 finden sich Beispiele für Pigmente und Füllstoffe. Weitere Beispiele basieren auf Neuentwicklungen insbesondere im Bereich der organischen Pigmente wie in der Klasse der Diketo-pyrrolopyrrole. Auch magnetische Pigmente auf Basis von Reineisen oder Mischoxiden können mit Hilfe der erfindungsgemäßen Urethanverbindung in Dispersionen eingebracht werden. Desweiteren lassen sich auch mineralische Füllstoffe wie Calciumcarbonat und Calciumoxid oder Flammschutzmittel wie Aluminium- oder Magnesiumhydroxid dispergieren. Zudem werden auch Mattierungsmittel wie Kieselsäuren dispergiert und stabilisiert.

Im Folgenden soll die Erfindung anhand von Ausführungsbeispielen näher beschreiben werden.

### Vergleichsbeispiel 1 (nicht erfindungsgemäß; ohne Lösungsmittel):

In einem 2000 ml Vierhalskolben mit KPG-Rührer, Stickstoffleitung und Intensivkühler wurden 435 g Benzylamin vorgelegt und auf 100°C aufheizt. Anschließend wurden 1065 g 1,6-Hexandiglycidylether in 180 min bei konstanter Temperatur von 100°C zudosiert. Das geprüfte Verfahren findet somit bei 100% in Substanz statt. Es wurde für 120 min bei 100°C, nachreagiert. Die Gesamtenergie liegt bei -799 kJ/kg (Tad = 470K) - es liegt eine hohe Exothermie vor. Die erforderliche Kühlleistung liegt bei 80 W/kg.

### Vergleichsbeispiel 2 (nicht erfindungsgemäß; mit Lösungsmittel):

In einem 2000 ml Vierhalskolben mit KPG-Rührer, Stickstoffleitung und Intensivkühler wurden 242 g Benzylamin in 726 g Butyiacetat vorgelegt und auf 100°C aufheizt. Anschließend wurden 533 g 1,6 Hexandiglycidylether in 180 min, bei konstanter Temperatur von 100°C zudosiert. Es wurde für 120 min bei 100°C nachreagiert. Der Akkumulationstherm am Ende der Dosierung liegt jedoch bei 40% - d.h. erhebliche Mengen sind nicht abreagiert.

Beispiel 3 (erfindungsgemäß; ohne Lösungsmittel):

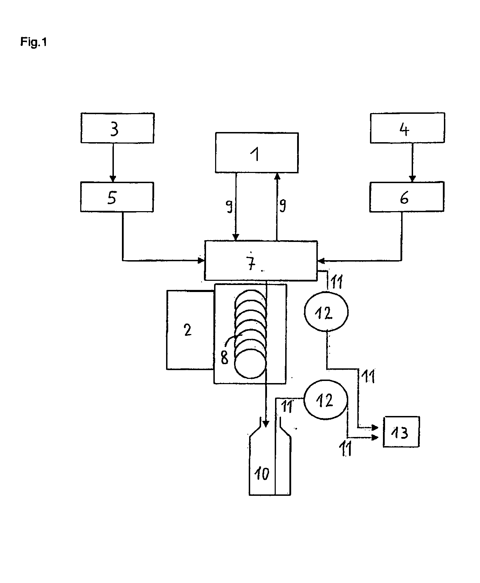

Die Zeichnung zeigt in Fig. 1 in schematischer Art und Weise den entsprechenden Versuchsaufbau, welcher dem erfindungsgemäßen Beispiel 3 zugrunde liegt.

Die Thermostaten 1 und 2 wurden auf Arbeitstemperaturen (Thermostat 1 = Reaktionsraum: 140°C; Thermostat 2 = Nachreaktion: 90°C) eingestellt.
Nachdem die Thermostaten die Betriebstemperaturen erreichten, wurden die Massenströme aus den Vorratsgefäßen 3 und 4 (Benzylamin: 1,299 g/min; 1,6-Hexandiglycidether: 3,174 g/min) mittels Pumpen 5 und 6 in die Reaktionskammer der Reaktionsmischpumpe 7 kontinuierlich gefördert. Die Reaktionsmischpumpe wurde über einen Frequenzumrichter mit 80% der maximal möglichen Umdrehungszahl betrieben. Während der Reaktion (kontinuierlich über min 5 Stunden) wurde im Reaktionsraum der Reaktionsmischpumpe eine Temperatur von 79-98°C gemessen. Zur Nachreaktion wurde das Reaktionsgemisch über einen geeigneten Schlauch 8 durch ein beheiztes Bad des Thermostaten 2 geleitet.
Der verwendet Schlauch 8 (zur Nachreaktion) hatte einen Innendurchmesser von 4 mm und eine Länge von 4m (Gesamt-System-volumen 155,8ml). Die Gesamtreaktionszeit betrug 36,1 Minuten. Zwischen dem Thermostaten 1 und der Reaktionsmischpumpe 7 waren verbindende, isolierte Schläuche 9 angeordnet. Die Reaktionsmischpumpe 7 sowie ein entsprechend installiertes Auffangbehältnis 10 waren jeweils über Datenleitungen 11 und Einrichtungen zur analytischen Erfassung 12 mit einem Computer 13 verbunden.

Nach beendeter Reaktion wurden alle Pumpen mit geeignetem Lösemittel gespült. Man erhält ein bei Raumtemperatur hochviskoses, leicht gelbliches Polymer mit folgenden analytischen Daten:
Farbe: farblos bis leicht gelblich
Gewichtsmittleres Molekulargewicht: 3000-4500 g/mol

Das erfindungsgemäße Verfahren gemäß Beispiel 3 ist gegenüber dem Verfahren gemäß Vergleichsbeispiel 1 leichter und sicherer handhabbar. Die pro umgesetzte Menge Glycidether erforderliche Kühlleistung ist bei dem erfindungsgemäßen Verfahren gemäß Beispiel 3 geringer als die entsprechende Kühlleistung, welche für das Verfahren gemäß Vergleichsbeispiel 1 gebraucht wird. Das dem Beispiel 3 zugrunde liegende Verfahrensprodukt weist eine geringe Viskosität sowie eine geringere OH-Zahl (Hydroxylgruppen pro Gewichtseinheit) als das Verfahrensprodukt gemäß Vergleichsbeispiel 1 auf. Relevante Urethanverbindungen, welche aus der Umsetzung des Verfahrensprodukts von Beispiel 3 mit einer entsprechenden Isocyanatkomponente resultieren, eignen sich in hervorragender Weise als Netz- und Dispergiermittel für Pigmente oder Füllstoffe.

## Patentansprüche

1. Verfahren zur Herstellung von Additionsverbindungen durch Umsetzung von
a) einer mindestens zwei Epoxidfunktionen aufweisenden Epoxidkomponente (A) mit
b) mindestens einer eine primäre Aminfunktion enthaltenden Aminkomponente (B)
in kontinuierlicher Betriebsweise in einem Reaktor, welchem die Epoxidkomponente (A) und die Aminkomponente (B) in einem molaren Verhältnis von 5:1 - 1:50 kontinuierlich zugeführt werden, so dass in dem Reaktor ein die Epoxidkomponente (A), die Aminkomponente (B) sowie Umsetzungsprodukte aus der Epoxidkomponente (A) und der Aminkomponente (B) enthaltendes Reaktionsgemisch entsteht, welches in Form eines Produktstroms aus dem Reaktor ausgeleitet wird, wobei 10-100 Mol% der durch die Zufuhr der Epoxidkomponente (A) in den Reaktor eingeführten Epoxidfunktionen in dem Reaktor umgesetzt werden und der Reaktor in Form einer Reaktionsmischpumpe ausgebildet ist, die ein rotierendes Behältnis aufweist, welches die Epoxidkomponente (A) und die Aminkomponente (B) getrennt voneinander aufnimmt und diese beiden Komponenten unter dem Einfluss von mechanischer Scherung miteinander in Kontakt bringt und vermischt.

2. Verfahren nach Anspruch 1 **dadurch gekennzeichnet, dass** als Epoxidkomponente (A) ein Diepoxid der allgemeinen Formel I 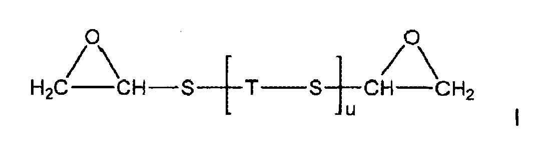 mit
S gleich oder verschieden sowie repräsentiert durch CH₂-O oder CH₂,
T gleich oder verschieden sowie repräsentiert durch verzweigtes oder unverzweigtes C₂-C₁₈-Alkylen, C₅-C₁₂-Cycloalkylen, C₆-C₁₀-Arylen oder verzweigtes oder unverzweigtes C₆-C₁₅Aralkylen sowie
u repräsentiert durch eine ganze Zahl von 1-8,
eingesetzt wird.

3. Verfahren nach Anspruch 1 oder 2 **dadurch gekennzeichnet, dass** die Aminkomponente (B) ausgewählt ist aus primären Aminen der allgemeinen Formel II
H₂N-R II
mit
R repräsentiert durch verzweigtes oder unverzweigtes C₃-C₁₈-Alkyl, C₅-C₁₂-Cycloalkyl, C₆-C₁₀-Aryl oder verzweigtes oder unverzweigtes C₇-C₁₂-Aralkyl
und/oder primären Aminen der allgemeinen Formel III
H₂N-R'-Z III
mit
R' repräsentiert durch eine verzweigte oder unverzweigte C₂-C₁₂-Alkylengruppe sowie Z repräsentiert durch einen aliphatischen oder aromatischen heterozyklischen C₃-C₆-Rest.

4. Verfahren nach einem der Ansprüche 1 bis 3 **dadurch gekennzeichnet, dass** die Epoxidkomponente (A) und die Aminkomponente (B) in einem molaren Verhältnis von 2:1 bis 1:5 dem Reaktor kontinuierlich zugeführt werden.

5. Verfahren nach Anspruch 4 **dadurch gekennzeichnet, dass** 25-100 Mol-% der durch die Zufuhr der Epoxidkomponente (A) in den Reaktor eingeführten Epoxidfunktionen in dem Reaktor umgesetzt werden.

6. Verfahren nach einem der Ansprüche 1 bis 5 **dadurch gekennzeichnet, dass** die Temperatur des Reaktionsgemischs im Reaktor 50-180 °C beträgt, wobei der Quotient aus Gesamtvolumen des in dem Reaktor enthaltenen Reaktionsgemischs und dem Gesamtvolumenstrom des in Form des Produktstroms aus dem Reaktor ausgeleiteten Reaktionsgemischs 2 - 20.000 Sekunden beträgt.

7. Verfahren nach einem der Ansprüche 1 bis 6 **dadurch gekennzeichnet, dass** das Gesamtvolumen des in dem Reaktor enthaltenen Reaktionsgemischs 0,001 - 100 Liter beträgt.

8. Verfahren nach einem der Ansprüche 1 bis 7 **dadurch gekennzeichnet, dass** dem Reaktor weitere in kontinuierlicher Weise betriebene Reaktorsysteme nachgeschaltet sind, welche bevorzugt die Nachdosierung der Epoxidkomponente (A) und/oder der Aminkomponente (B) und/ oder eine Nachtemperierung verwirklichen.

9. Verfahren nach einem der Ansprüche 1 bis 8 **dadurch gekennzeichnet, dass** der Reaktor in einer Vorrichtung angeordnet ist, welche weitere jeweils unabhängig voneinander kontinuierlich betriebene Reaktoreinrichtungen enthält, in welchen die Epoxidkomponente (A) mit der Aminkomponente (B) umgesetzt wird, wobei diese Reaktoreinrichtungen und der Reaktor zeitgleich und unabhängig voneinander parallel betrieben werden.

## Claims

1. Process for producing addition compounds by reaction of
a) an epoxide component (A) having at least two epoxide functions with
b) at least one amine component (B) containing at least one primary amine function
in continuous operation mode in a reactor, to which the epoxide component (A) and the amine component (B) are supplied continuously in a molar ratio of 5:1 - 1:50, so that a reaction mixture containing the epoxide component (A), the amine component (B) and reaction products of the epoxide component (A) and the amine component (B) is produced, which is discharged from the reactor in the form of a product stream, wherein 10-100 mol % of the epoxide functions introduced into the reactor by the supply of the epoxide component (A) are reacted and the reactor is configured in the form of a reaction mixture pump, which comprises a rotating container which receives the epoxide component (A) and the amine component (B) separate from one another and brings these two components into contact with one another and mixes them together under the influence of mechanical shearing.

2. Process in accordance with claim 1 **characterised in that** a di-epoxide of the general formula is employed I as epoxide components (A) 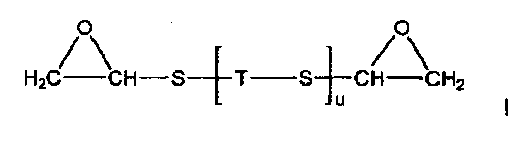 where
S is the same or different and are represented by CH₂-O or CH₂,
T is the same or different and is represented by branched or unbranched C₂-C₁₈ alkylene, C₅-C₁₂ cycloalkylene, C₆-C₁₀ arylene or branched or unbranched C₆-C₁₅ aralkylene and u represents a whole number from 1-8.

3. Process in accordance with claim 1 or 2, **characterised in that** the amine component (B) is selected from primary amines of the general formula II
H₂N-R II
where
R represents branched or unbranched C₃-C₁₈ alkyl, C₅-C₁₂-cycloalkyl, C₆-C₁₀ aryl or branched or unbranched C₇-C₁₂ aralkyl
and/or primary amines of the general formula III
H₂N-R'-Z III
where
R' is a branched or unbranched C₂-C₁₂ alkylene group and Z is an aliphatic or aromatic heterocyclic C₃-C₆ radical.

4. Process in accordance with one of the claims 1 to 3, **characterised in that** the epoxide component (A) and the amine component (B) are continuously supplied to the reactor in a molar ratio of 2:1 to 1:5.

5. Process in accordance with claim 4, **characterised in that** 25-100 mol % of the epoxide functions (A) introduced by supply of the epoxide component (A) to the reactor are reacted in the reactor.

6. Process in accordance with one of the claims 1 to 5, **characterised in that** the temperature of the reaction mixture in the reactor is 50-180 °C, wherein the quotient of total volume of the reaction mixture contained in the reactor and the total volumetric flow rate of reaction mixture discharged from the reactor in the form of the product stream is 2 - 20,000 seconds.

7. Process in accordance with one of the claims 1 to 6, **characterised in that** the total volume of reaction mixture contained in the reactor is 0.001 -100 litres.

8. Process in accordance with one of the claims 1 to 7, **characterised in that** additional reactor systems operated in a continuous manner are downstream of the reactor, preferably carrying out re-dosing of the epoxide component (A) and/or the amine component (B) and/or a re-heating.

9. Process in accordance with one of the claims 1 to 8, **characterised in that** the reactor is arranged in a device which contains additional continuously-operated reactor equipments independent of one another, in which the epoxide component (A) is reacted with the amine component (B), wherein these reactor equipments and the reactor are operated in parallel simultaneously and independent of one another.

## Revendications

1. Procédé de fabrication de produits d'addition par réaction de
a) un composant époxyde (A) présentant au moins deux fonctions époxyde, avec
b) au moins un composant amine (B) contenant une fonction amine primaire,
de façon continue, dans un réacteur dans lequel le composant époxyde (A) et le composant amine (B) sont ajoutés en continu selon un rapport molaire compris entre 5:1 et 1:50, si bien que se forme dans le réacteur un mélange réactionnel, contenant le composant époxyde (A), le composant amine (B) ainsi que des produits de la conversion du composant (A) époxyde et du composant amine (B), qui est dirigé hors du réacteur sous la forme d'un courant de produit, 10 à 100 % en mole des fonctions époxyde introduites dans le réacteur par l'apport du composant époxyde (A) étant converties dans le réacteur, et le réacteur étant exécuté sous la forme d'une pompe mélangeuse par réaction qui présente un récipient en rotation qui reçoit le composant époxyde (A) et le composant amine (B) séparément l'un de l'autre, et amène ces deux composants en contact l'un avec l'autre et les mélange sous l'influence d'un cisaillement mécanique.

2. Procédé selon la revendication 1, **caractérisé en ce que** l'on utilise en tant que composant époxyde (A) un diépoxyde de formule générale I, 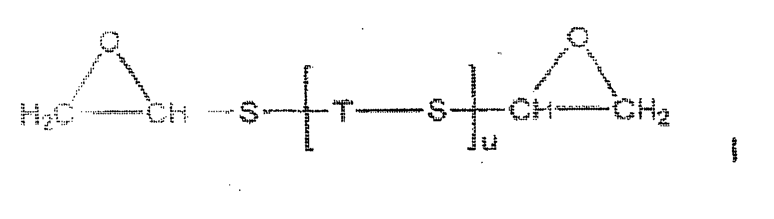 dans laquelle
les groupes S sont identiques ou différents et représentent CH₂-O ou CH₂, les groupes T sont identiques ou différents et représentent un groupe alkylène en C₂-C₁₈ linéaire ou ramifié, cycloalkylène en C₅-C₁₂, arylène en C₆-C₁₀ ou aralkylène en C₆-C₁₅ linéaire ou ramifié, et
u est un nombre entier compris entre 1 et 8.

3. Procédé selon la revendication 1 ou 2, **caractérisé en ce que** le composant amine (B) est sélectionné parmi des amines primaires de formule générale II
H₂N-R II
dans laquelle
R représente un groupe alkyle en C₃-C₁₈ linéaire ou ramifié, cycloalkyle en C₅-C₁₂, aryle en C₆-C₁₀ ou aralkyle en C₇-C₁₂ linéaire ou ramifié,
et/ou des amines primaires de formule générale III
H₂N-R'-Z III
dans laquelle
R' est un groupe alkylène en C₂-C₁₂ linéaire ou ramifié, et
Z est un radical en C₃-C₆ hétérocyclique aliphatique ou aromatique.

4. Procédé selon l'une des revendications 1 à 3, **caractérisé en ce que** le composant époxyde (A) et le composant amine (B) sont amenés en continu dans le réacteur selon un rapport molaire compris entre 2:1 et 1:5.

5. Procédé selon la revendication 4, **caractérisé en ce que** 25 à 100 % en mole des fonctions époxyde introduites dans le réacteur par l'apport du composant époxyde (A) sont converties dans le réacteur.

6. Procédé selon l'une des revendications 1 à 5, **caractérisé en ce que** la température du mélange réactionnel dans le réacteur est comprise entre 50 et 180 °C, le quotient entre le volume total du mélange réactionnel contenu dans le réacteur et le débit volumique total du mélange réactionnel qui sort du réacteur sous la forme d'un courant de produit étant de 2 à 20 000 secondes.

7. Procédé selon l'une des revendications 1 à 6, **caractérisé en ce que** le volume total du mélange réactionnel contenu dans le réacteur est compris entre 0,001 et 100 litres.

8. Procédé selon l'une des revendications 1 à 7, **caractérisé en ce que** sont intercalés après le réacteur d'autres systèmes à réacteur exploités de façon continue et qui réalisent de préférence le post-dosage du composant époxyde (A) et/ou du composant amine (B) et/ou le post-équilibrage de la température.

9. Procédé selon l'une des revendications 1 à 8, **caractérisé en ce que** le réacteur est disposé dans un appareil qui contient d'autres dispositifs à réacteur exploités de façon continue et indépendamment les uns des autres, dans lesquels sont convertis le composant époxyde (A) et le composant amine (B), ces dispositifs à réacteur et le réacteur étant exploités en parallèle, en même temps et de façon indépendante les uns des autres.
